# EUROPEAN PATENT APPLICATION

(11) **EP 2 564 732 A1**
(43) Date of publication of application: **06.03.2013**
(21) Application number: 11775359.0
(22) Date of filing: 25.04.2011
(51) Int. Cl.: A47F 5/02, A47G 19/00, A47G 23/02

(54) **DEVICE FOR THE ROTATION OF OBJECTS (EMBODIMENTS). SET FOR THE ROTATION OF OBJECTS**

(30) Priority: 30.04.2010 RU 2010117272; 19.04.2011 RU 2011115357
(71) Applicant: Bushkovskiy, Evgeniy Vladimirovich, St. Petersburg 197371 (RU)
(72) Inventor: Bushkovskiy, Evgeniy Vladimirovich, St. Petersburg 197371 (RU)
(74) Representative: Sonn & Partner Patentanwälte
(86) International application number: PCT/RU2011/000268
(87) International publication number: WO 2011/136699

(57) **Abstract**

The invention relates to the consumer goods industry; in particular, it is related to containers and rotating supports for different items. The device for rotation of items accordingto variant 1 includes a basement with a central bearing projection made as integral whole with an item, or with the possibility to fix an item at it, characterized in that the ratio of the basement's radius to the height of the central bearing projection is within 40-2000. According to variant 2, the basement is made with at least one lateral projection of lesser height than the central one. According to variant 3, the basement has a central bearing projection and has the possibility to fix an item at it. According to variant 4, the central bearing projection is made with a flanged bearing surface, or ring-shaped; or it is formed by separate members located circumferentially. The special feature of variants 5 and 6 of the invention are a basement with a profiled surface forming central and peripheral bearing areas. A set for rotation of items including at least one device being the basement, with a central bearing projection, and made as integrated whole with an item, or with the possibility to fix an item at it, and some separate bearing member with flanged bearing surface for the corresponding basement, or one bearing member with flanged bearing surface for at least two basements.

## Description

The invention is related to the consumer goods industry; in particular, it's related to containers and rotating supports for different items.

There is known a device for rotating a liquid container which includes a basement with a central bearing projection being made together with an item in whole (See RU Patent No. 52685 of 27. 04. 2006).

A disadvantage of the known device is the impossibility of rotating the basement within allowable limits of its swaying; this is especially important for using a glass for liquid. In addition, the value of rotation resistance force depending on the basement diameter and shape is important for rotation.

The technical result being an aim of the invention consists in the creation of such embodiments of the device for rotation of items which exclude the possibility of its excessive swaying due to certain proportions of the basement components, and increase its rotation time.

For the device, according to a first aspect, the above technical result shall be achieved due to the ratio of the basement radius to the central bearing projection height being within 40-2000; have, the basement could be made at least with one lateral projection of lesser height than the central one.

The lateral projections could be made as bearing ones, and located at the basement lower surface, with the possibility to interact with the cylindrical surface of a restrictor enveloping the basement.

For the device, according to second embodiment, which includes a basement with a central bearing projection being made together with an item in whole, or with the possibility to fix an item at, the technical result shall be achieved due to the basement being made at least with one lateral projection of lesser height than the central one. The possible location of the lateral projections is described above.

The value of ratio of distances between centers of the central bearing projection and the lateral projections to the difference between their heights should be within 40-2000.

The lateral projections could be pointed, curved, straight, or ring-shaped.

The central bearing projection and/or the lateral projections may be height-adjustable, for example, as threaded components with flanged bearing surface made from easily machinable material.

In some cases, the basement may be made with adjustable counter-weights, for example, as threaded components.

To create an air film, the lower surface of the basement can be profiled simulating propeller blades and/or forming air ducts.

To slow response, the basement could be made having a massive part and/or equipped at least with one weight, for example, in the shape of ring or as discrete mass.

To create some entertaining effect, the basement should have a cavity where an indicatory element having a possibility to move may be located.

For the device, according to a third embodiment, the technical result may be achieved due to the basement with a central hearing projection capable for fixing an item at it. Such a basement construction slows its response and increases its generality of usage (increases its scope of application).

For the device, according to a fourth embodiment, which includes a basement with a central hearing projection being made together with an item in whole or with the possibility to fix an item at, the technical result may be achieved by the bearing projection being ring-shaped, or having a flanged bearing surface, or with separate components being located circumferentially. Such a construction of the basement allows its usage at rough and relatively soft surfaces; as well as it allows keeping the stable upright position without using any lateral support points; here, the ratio of the basement lower surface area and the bearing projection flanged bearing surface area, or area being enclosed with components forming the bearing projection, may be 16 - 400.

For the device, according to a fifth embodiment, the technical result may be achieved if the device for rotation of items includes a basement with a central bearing projection being made together with an item in whole or with the possibility to fix an item at, and having a lower profiled surface where the maximum height of the protruding central bearing area is more than the height of its peripheral bearing areas.

The lower profiled surface can be made convex or conical, with at least one protruding peripheral bearing area, or one lateral projection of lesser height than that of the lower profiled surface central bearing area, or wavy in planes crossing the basement's vertical central axis.

In the invention, according to a sixth embodiment, the technical result may be achieved if the device for rotation of items includes a basement with a central bearing projection being made together with an item in whole or with the possibility to fix an item at it and having a lower profiled surface forming a protruding central bearing area, and at least one peripheral bearing projection; or forming at least one peripheral bearing area and a central bearing projection; at that, the height of the protruding central bearing area is more than that of the peripheral bearing projection, or the height of the central bearing projection is greater than that of the peripheral bearing area.

To ensure the technical result achievement, a set for rotation of items may be used which includes at least one device including a basement with a central bearing projection being made together with an item in whole or with the possibility to fix an item at it, and one bearing member having a flanged bearing surface for the respective basement, or one bearing member having a flanged bearing surface for at least two basements.

The set for rotation of items could be equipped with a packing having a plain surface for bearing the basement, being made, for example, at its cover.

The nature of inventions is been explained with respect to the drawings.
Figure 1 shows a general view of the basement according to a first embodiment
Figure 2 shows a general view of the basement for rotating items according to a second embodiment;

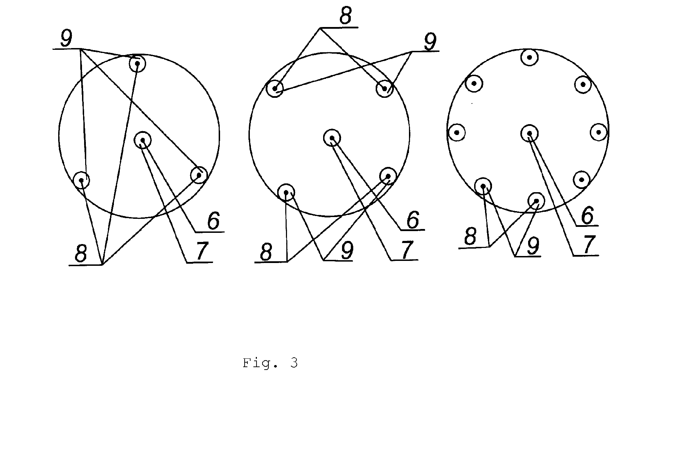

Figure 3 shows an ordered arrangement of lateral projections;

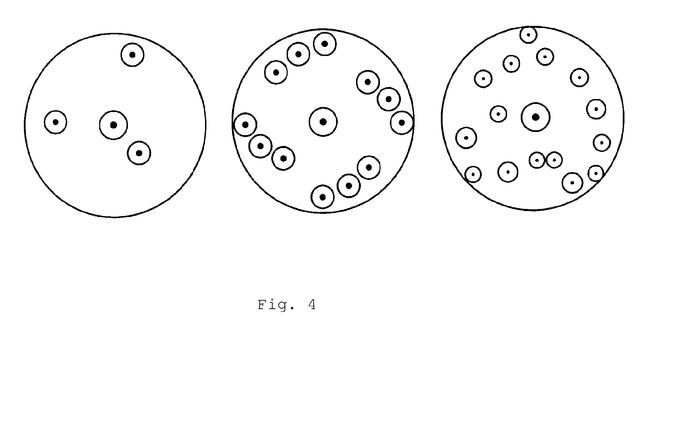

Figure 4 shows other variants of the projection arrangement;

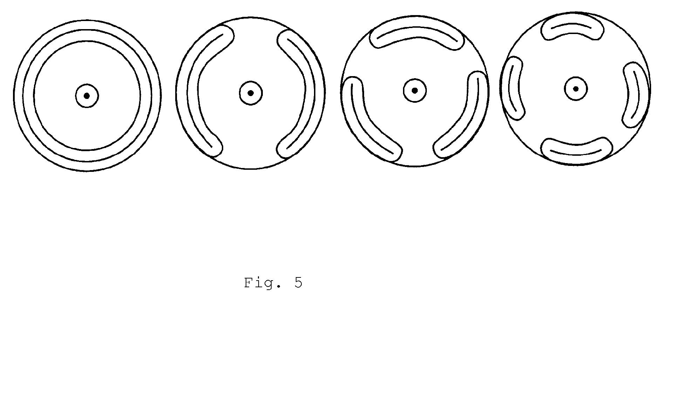

Figure 5 shows a basement with one ring-shaped projection and several curved projections located circumferentially;

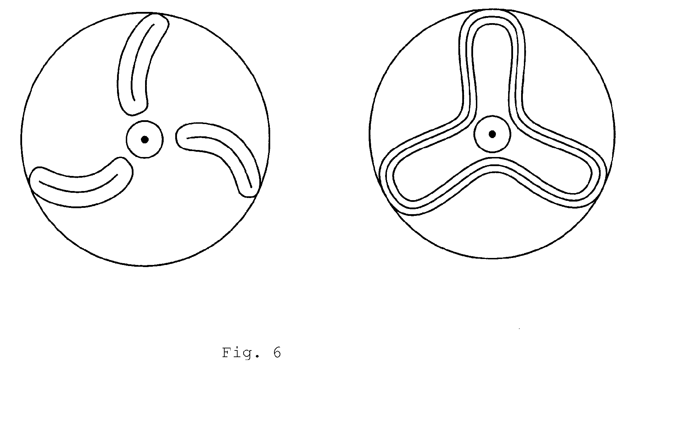

Figure 6 shows the same with curved profiled projections;

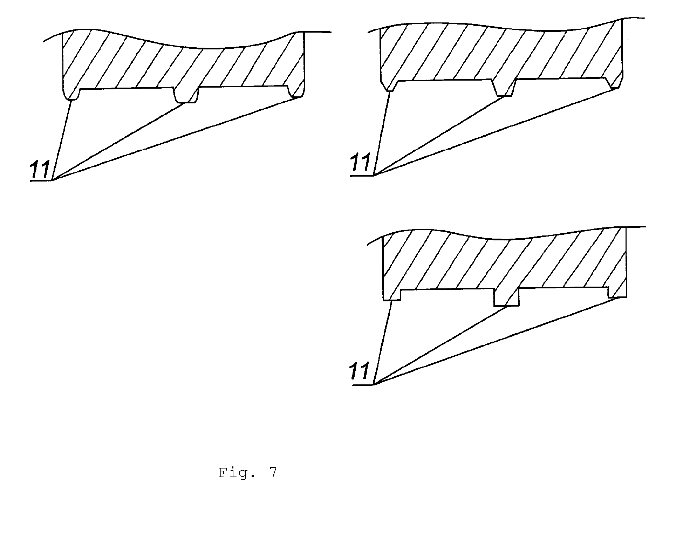

Figure 7 shows projections with a flanged bearing surface
Figure 8 shows possible shapes of the basement lower surface;
Figure 9 shows possible shapes of the projections;
Figure 10 shows the adjustable projections;
Figure 11 shows a basement with counter-weights;
Figure 12 shows a basement with its lower surface in the shape of blades;
Figure 13 shows a basement with air intakes;
Figure 14 shows a basement with additional weight;
Figure 15 shows variants of an additional weight;
Figure 16 shows a central bearing projection with a bearing area;
Figure 17 shows a ring-shaped central bearing projection;
Figure 18 shows a ring-shaped central bearing projection made with separate members;
Figure 19 shows the device's basement with a convex lower surface;
Figure 20 shows the device's basement with a wavy lower surface;
Figure 21 shows the device's basement with a cone lower surface;
Figure 22 shows the device's basement with a central bearing area and peripheral bearing projection;
Figure 23 shows the device's basement with a peripheral bearing area and a central bearing projection.

The device for rotating items includes a basement 1 with a lower surface 2. The lower surface's 2 shape and size are important for the rotation of any item 4 at any even horizontal surface 3) about any vertical axis 5. The basement could be an independent item, or be an integral part of the item 4; for example, it could be a bottom of a glass, or some bearing member of the support. If the basement is an independent item, the method of fixing the item 4 to the basement shouldn't be essential. The item 4 could be fixed to the basement 1 by any way.

The basement's support point 6 is located at its central bearing projection 7; and by the second variant, the basement has also lateral support points 8 at lateral bearing projection 9.

The shape of a central support point at the lower part of the projection 7 depends on its shape - semi-sphere, cone, pyramid, rod, needle, etc. The central support point 6 is located at the vertical axis 5 (axis of rotation) passing through the basement's center of balance 10.

The lateral support points 8 (lateral projections - 9) are located in a distance "a" from the central support point 6. The distance "a" shall be defined by the dimensions of the basement 1 and could be less than diameter of the basement's 1 lower surface 2.

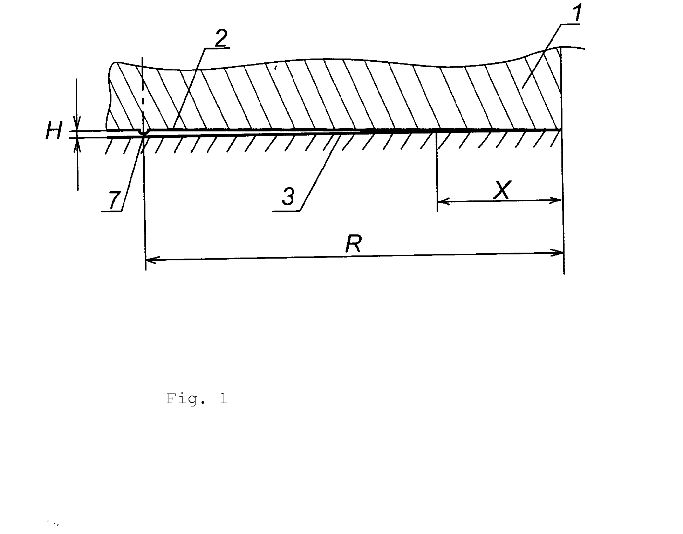

At the first variant (of all the variants) (Fig. 1), the special feature of the device consists in the ratio of the basement radius R to the central bearing projection height H being within 40-2000; here, the basement could be made at least with one lateral projection of lesser height than the central one. The above ratio has been obtained by experimental and theoretic way using bearing surfaces 3 having different grades of finish.

At the second variant, the special feature of the device construction consists in the special developed shape of the basement's 1 lower surface 2. The number of lateral support points (lateral projection) could be three or more. The lateral support points could be orderly located at the lower surface; for example, they could be located at apexes of some equilateral polygon with its center at the central support point, or randomly, or ornamentally.

It is possible to use one ring-shaped lateral projection made integrally with the basement, or screwed on to the basement; or one closed profiled lateral projection. The lateral projections could be made as curved legs being located circumferentially, or in a form of some ornament.

For best rotating of the basement, with a minimum friction between the lateral bearing points and the surface 3, a location of the lateral bearing points along a continuous or interprupted line circumferentially with respect to the center of a circle at the central support point is preferred.

The central projection and the lateral projections could be of different shapes in their section - triangle, semicircle, etc.

In this case, contact with the surface 3 would be performed at the separate points decreasing the friction between the bearing points and the surface 3. Also, the projections could have small flat areas 11 at their ends. Thiscould reduce the wearing process of the projections during their friction with the surface 3 when rotating, and reduce the rotating resistance of the rough and respectively soft surface 3.

A purpose of the central support point 6 consists in providing, for the basement 1, its capability to rotate about the axis of rotation 5. A purpose of the lateral support points consists in providing for the basement its necessary stability in vertical position, avoiding its sideward overturning. The ideal embodiment could be possible if the basement 1 being at the horizontal surface 3 could bear on this surface via the only central support point 6. In this case, the basement could rotate about the axis of rotation 5 as effectively as possible (with maximum duration). However, as the center of balance 10 is located higher than the support point 6, the basement being supported with one central support point only would be in an instable equilibrium. Tus, the basement will try to go to the state of stable equilibrium by inclination to any side with supporting by the horizontal surface in addition to the central support point 6, by the lateral support points 8 or the basement's end additionally.

When the basement is in its dominant equilibrium and rotates on the surface 3 about the axis of rotation5, it is in such a position being supported by the horizontal surface using the central and lateral support points continuously.

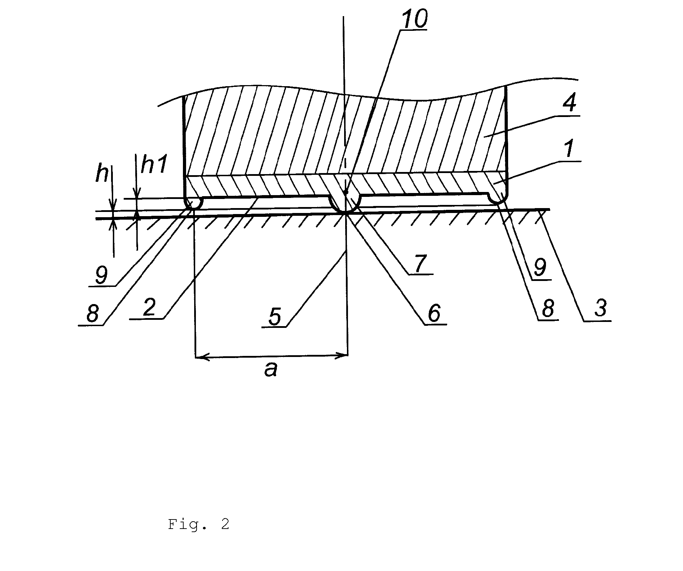

The size h (Fig. 2) is important for the basement structure. The size h defines the height of the central projection 7, which includes the central support point, in relation to the lateral support points. Due to this projection, the basement could rotate about the vertical axis 5 on the horizontal surface 3. With a value of h=0, the central support point and lateral support points are in the same plane. Then, rotation of the basement is impossible. If the value of h is too high, the basement should swing a lot (it inclines sideward from the vertical axis 5). Such a swinging of the basement decreases its time of rotation significantly. Swinging the basement decreases its visual appeal significantly. The optimum value of h is 0.05-0.15 mm. This range of h shall be recommended for the basement when the size "a" (Fig. 2) is within 20-100 mm. Then, using the basement on horizontal flat surfaces with insignificant roughness is supposed. Such surfaces could include almost all the widely used surfaces for manufacturing the tabletops, windowsills, furniture. Different hard plastics, wood, artificial and natural stone, etc. could be a material for such a surface. The range of h = 0.02-0.05 mm will be optimum for a range of the size a of 5 - 50 mm, as well as when the basement is supposed to be used on rather smooth surfaces, such as glass, polished stone, and similar. A range of h = 0.1- 1 mm is recommended for devices with a = 100 - 500 mm, as well as when the basement is used at too rough surfaces or surfaces having significant curves (height differences). The basements with a bigger value of h are possible when a correspondently bigger value of "a" is used, as well as for their usage at curved surfaces.

Also, the value of h1 (Fig. 2) is important for the basement structure. The size h1 defines the height of the lateral projections 9 and the distance between the basement lower surface 2 and the horizontal surface 3. The lateral projections 9 are necessary for the following. When there is no lateral projection h1=0, the basement 1 lower surface 2 is plane (Fig. 2). As the recommended value of h is too small, in a case of the basement flat lower surface, its significant part could come into contact with the surface 3. Conditionally, let's name this part of contacting surfaces as area X (Fig. 1). When rotating the basement in the area X, some significant friction between the basement 1 lower surface 2 and the surface 3 occurs. In addition, different foreign fine particles (dust, fine sand, particles of food, etc.) could be present at the surface 3; they also could resist to the basement rotation significantly. To exclude the above factors, which resist to the basement rotation, the application of h1 = h and more is recommended, as well as ratios of the above parameters for the first and second variants of the invention. When manufacturing the basement, the maximum value of h1 shall be defined whether based on esthetic considerations, or technological requirements. Also, the maximum value of h1 could be defined based on a more complicated shape of the lower surface 2 in cases when such a shape of the lower surface leads to an improvement of the basement rotation.

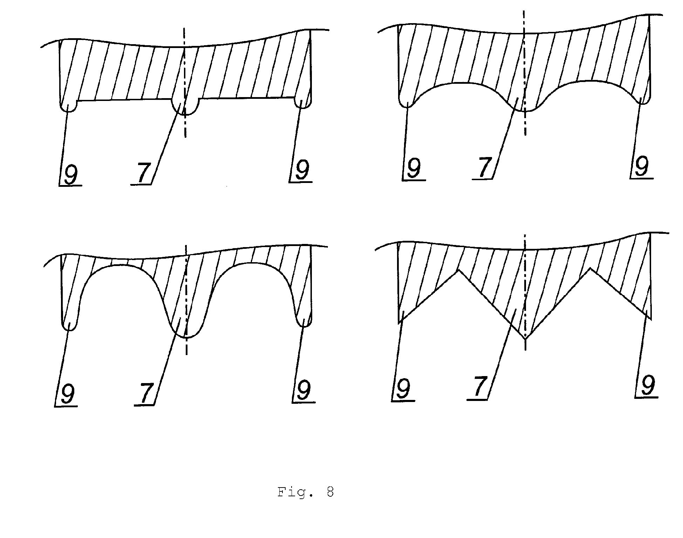

Based on esthetic considerations, the basement could have more complicated configuration. The central projection 7, the lateral projections 9, and the lower surface 2 could be of different shapes (Fig. 8).

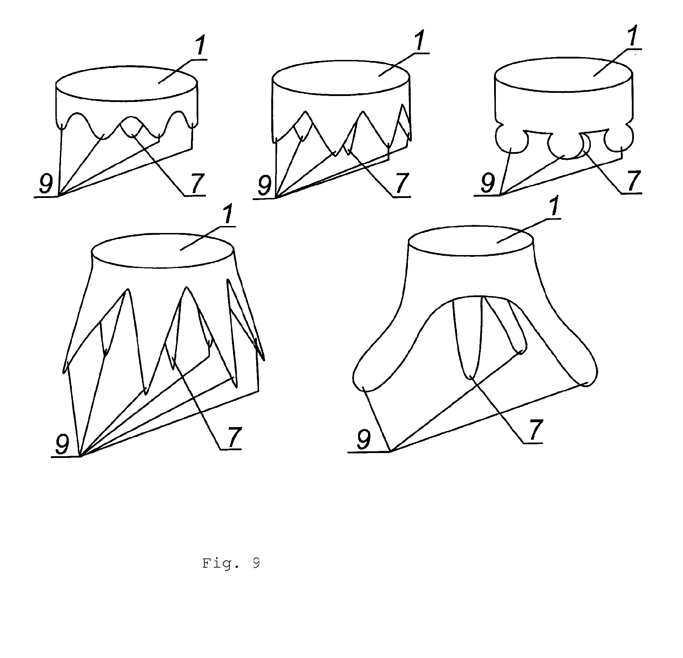

The central projection 7 and the lateral projections 9 could take a shape of columns, spheres, "legs", beams, etc. The lower surface 2 takes a shape of bow, arch, and other complicated forms (Fig. 9).

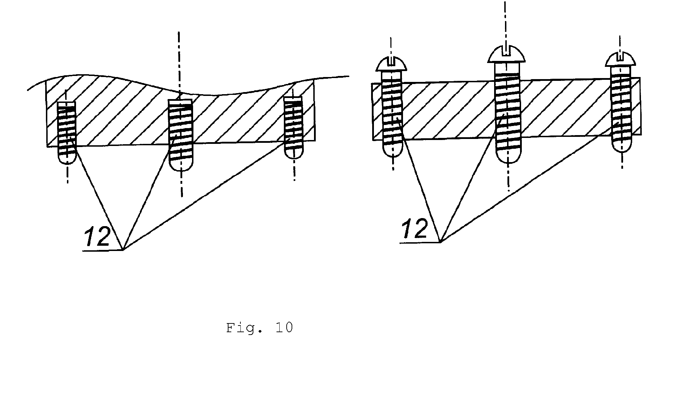

The central projection 7 and the lateral projections 9 could be adjustable by height. In this case, the value of h is adjustable to the necessary value (for example, depending on the basement 1 rotation surface 3 roughness degree). For this purpose, the projections 7 and 9 could be performed separately from the basement as threaded rods 12 and connected to the basement with threaded connections (Fig. 10).

It is very important for the center of balance 10 (Fig. 2) to be at the axis of rotation 5, or as close to it as possible. In such a case, the minimum pressure will be applied by the lateral support points 8 to the horizontal surface 3. Then, the lateral support points 8 will be subject to minimum friction at the horizontal surface 3 during rotation of the basement at the horizontal surface.

However, when the shape of the combination of the basement and the item 4 is complex, and calculation of exact location of the central support point 6 in relation to the axis 5 becomes complicated; the possibility of no coincidence between the axis 5 and center of balance 10 exists.

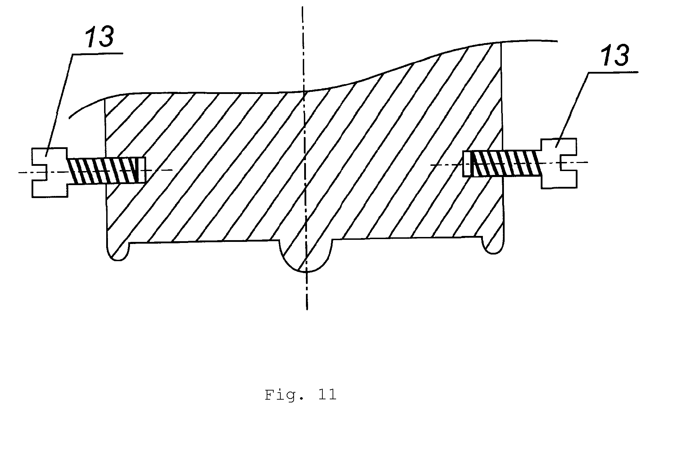

In order to make the center of balance 10 and axis of rotation 5 as close as possible, the basement structure could be equipped with the system of adjustable counter-weights (balancers); and moving the basement's center of balance should be possible by moving these balancers. The counter-weights could be made as components 13 (Fig. 11) screwed into it using a connecting thread or otherwise.

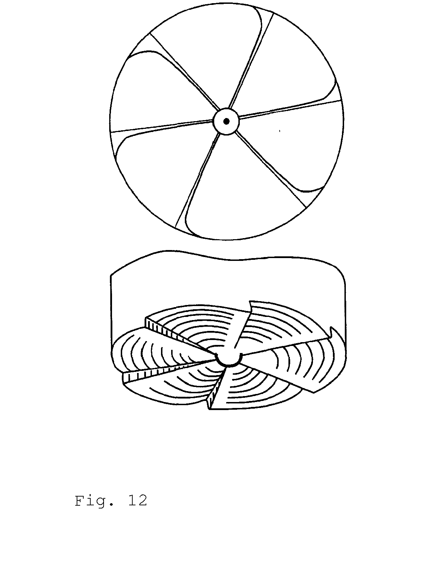

The basement's lower surface could be made in a shape similar to blades of fan, propeller, and turbine (Fig. 12)

During the basement rotation, such blades will generate some lifting force decreasing the pressure of lateral support points to the surface of basement rotation. At that, friction between the lateral support points and the surface 3 will decrease, and the duration of the basement rotation will increase.

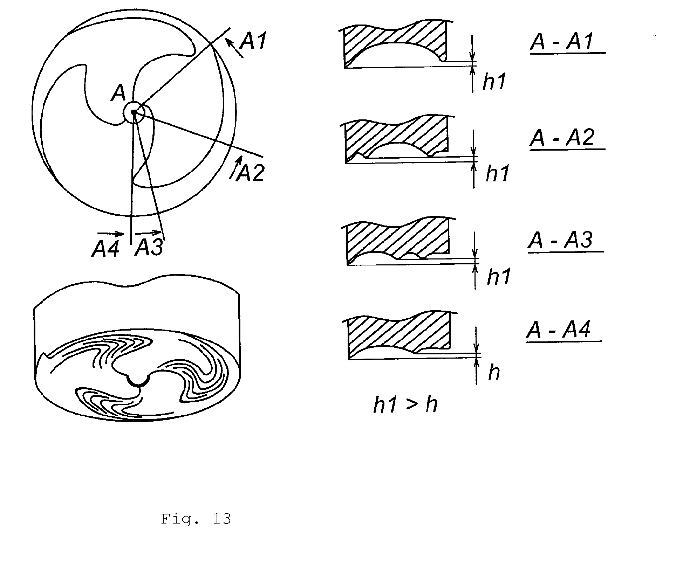

The lower surface of the basement could be made with grooves - air intakes (probably, combined with blades) (Fig. 13). During the basement rotation, these grooves - air intakes - will generate some concentrated air flows (jets) directed to the lateral support points, and by that, some air cushion effect is created between the lateral support points and the surface of the basement rotation. Due to that, the friction between the lateral support points and the surface of the basement rotation will decrease, and the duration of the basement rotation will increase.

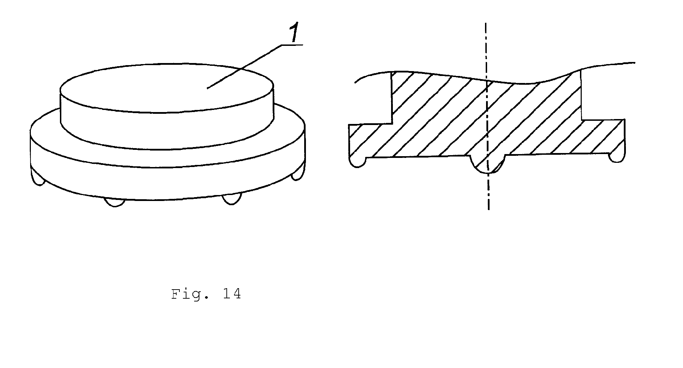

To increase the duration of basement rotation, its inertia (principle of flywheel) shall be increased. This can be achieved by using materials of higher density for manufacturing the basement. It could be achieved using some design solutions - by distribution of significant part of the basement's weight around its lateral peripheral part (on perimeter) uniformly (Fig. 14).

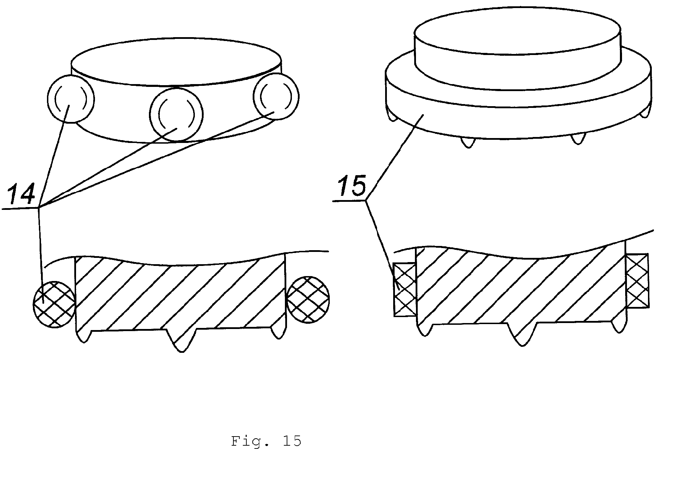

If the basement is made from some material of low density, its inertia could be increased significantly by uniform distribution of some additional counter-weights along its lateral peripheral part (perimeter) (Fig. 15); such counter-weights could be made as separate units 14 or as a complete ring 15 from some material of high density.

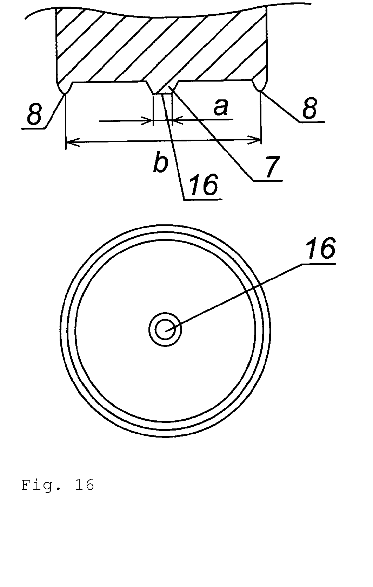

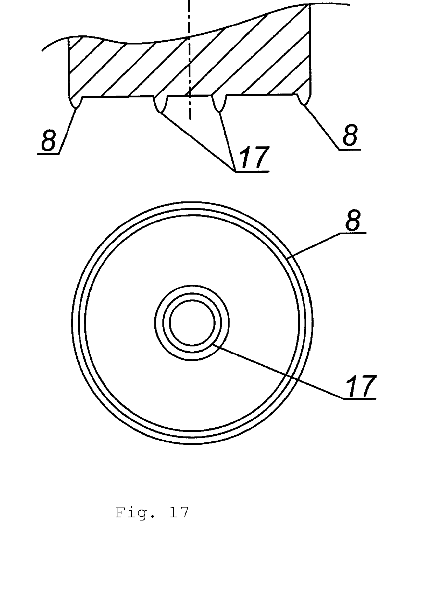

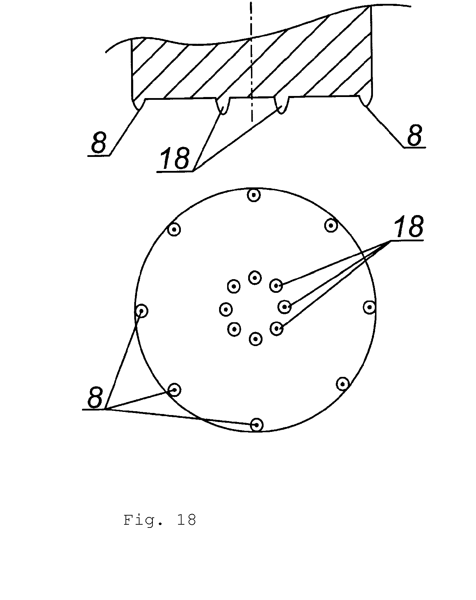

The central bearing projection could have any flanged bearing surface 16 (Fig. 16), or be made as a ring 17 (Fig. 17), or consist of separate members 18 being located circumferentially (Fig. 18); then, the ratio between the lower surface of the basement and the area of the flanged bearing surface, or area of the bearing projection limited by the members of the bearing projection shall be 16 - 400.

With this design, the basement is only supported by the area 16, when it is in the dominant equilibrium at the horizontal surface, or rotates about the vertical axis of rotation 5, or is supported by the area 16 only. It allows the basement's vertical stable position without support by the lateral support points 8. Due to that, no friction between the lateral support points 8 and the surface 3 is encountered to create any frictional action on the basement rotation.

When using this variant of the basement design, the location of the center of balance 10 at the vertical axis of rotation 5 being located within the area 15, or ring 17, or the ring consisting of the members 18 is very important.

Any additional improving the basement by the second variant of the invention shall be related to all its variants.

### Application of the device.

As above indicated, this device shall be applied in combination with the item 4 whether as integral assembly, or as independent member for fixing the item 4 at it.

The variant of integral embodiment of the basement with the item could be applied when the item as integral whole with the basement is manufactured by the following way: I - mold casting (plastic, polymers, glass, crystal, ceramics, metal). 2 - mold pressing (press forming) (plastic, polymers, glass, metal), 3 - machining process (plastic, polymers, glass, crystal, ceramics, metal, artificial and natural stone, wood).

The generality of application is a special feature of the variant for making the basement separately. However, in this case, the additional complicacy appears due to the necessity of some mechanism for fixing an item at the device.

The basement 1 with some profiled surface forming the central protruding bearing area 19, or central projection 20 with central support point 6 and lateral support points 8 at the lateral stop projections 9 or peripheral bearing areas (parts) 21 being formed by the profiled surface are special features of the fifth and sixth invention variants.

The shape of the central support point 6 could be spherical, or cone. The central support point 6 shall be located at the vertical axis 5 passing through the basement's center of balance 10.

The lateral support points 8 (lateral stop projections 9 or peripheral bearing areas (parts) 21) are located in the distance "a" from the central support point 6. The distance "a" shall be defined by dimensions of the basement 1 and could be less than the basement's 1 lower surface 2 diameter.

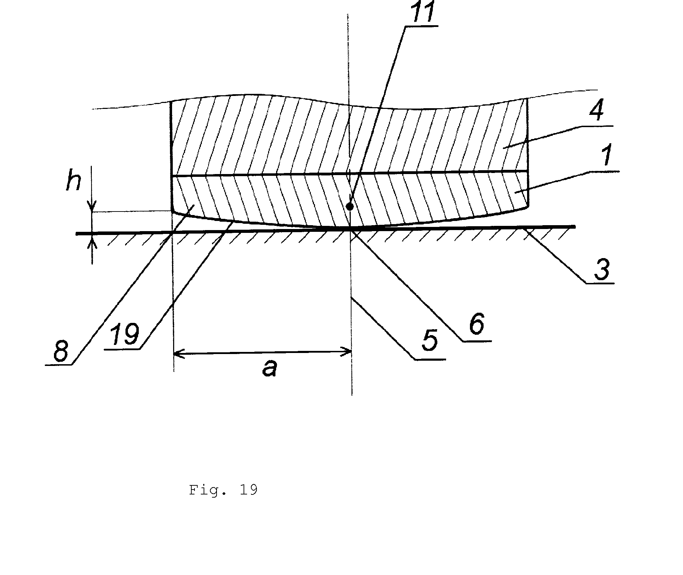

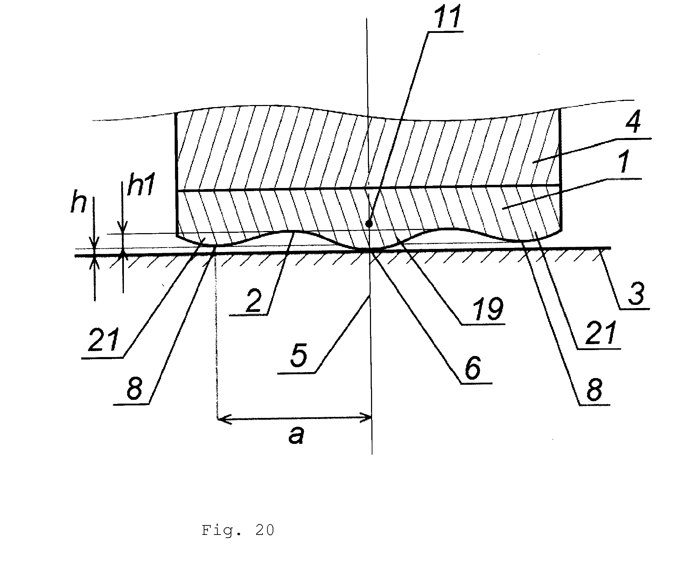

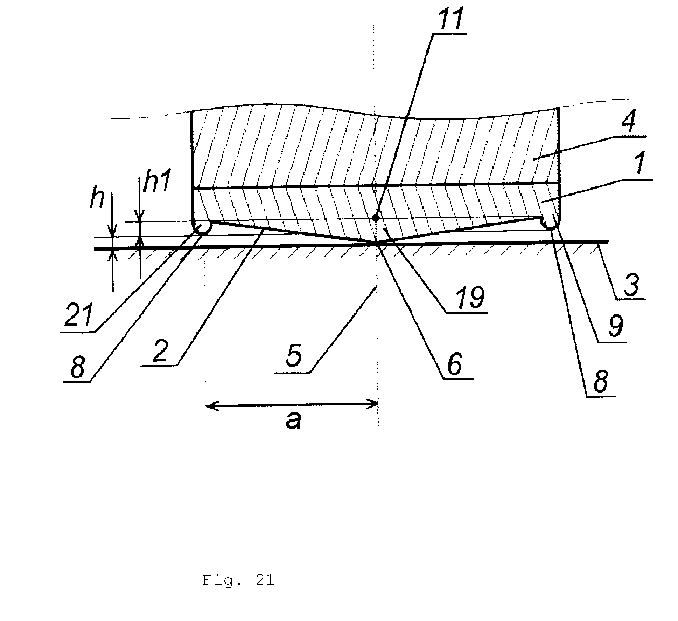

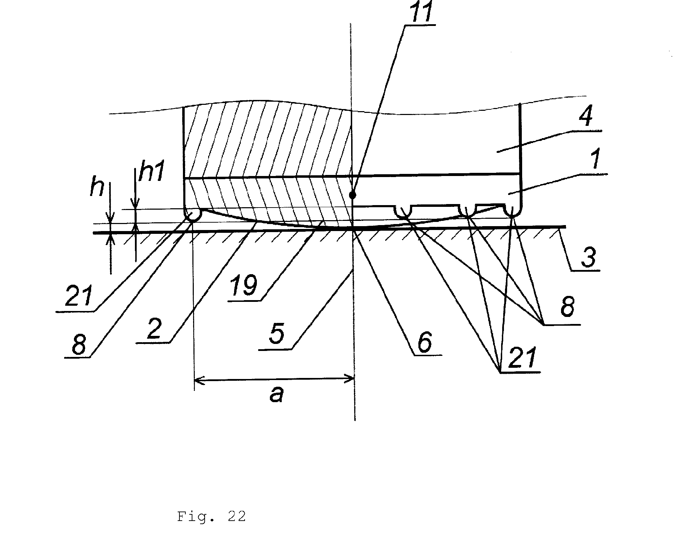

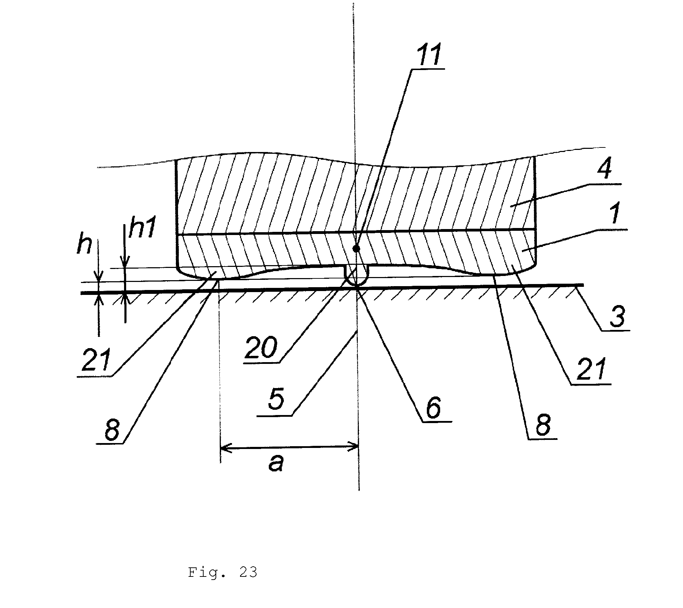

The above parameters h and h1 could be applied to the peripheral bearing area 21 and to the central protruding bearing area 19 (Fig. 19 - 23) as well.

Independent of the variant of embodiment, the item on the basement could correspond to many different applications. It could be some hollow container or box:
- any container for keeping any small items (casket, plastic cup for pencils, container for bulk stock, ash tray, plate....)
- container (vessel) for liquids (glass (wineglass), vase, shaker, chemical utensils....)

It could be some monolithic item:
- any interior decoration (sculpture, candlestick, candelabrum.....)
- reward decoration (pennon, goblet, obelisk.....)

It could be some complex structure
- some appliance for outdoor advertising (display, support (pedestal) for demonstration of the advertised goods in a shop or at an exhibition....)

Also, the device could be a playing component. For this purpose, the basement should be hollow; and within its cavity, some indicatory member being capable to move shall be located, for example, a ball. When rotating the basement, independent moving of the indicatory member is performed; and having stopped, the indicatory member indicates the winner or looser.

Not all the bearing surfaces, for example, a table covered with an oilcloth, could provide the necessary degree of rotation. To provide the guaranteed basement rotation at any bearing surface, one could use a set for rotation of items including at least one basement with the central bearing projection being made as integrate whole with an item, or with the possibility to fix an item at, and separate bearing member with flanged bearing surface for the correspondent basement, or one bearing member with flanged bearing surface for at least two basements.

Thus, the set could include several basements and a respective number of the bearing members with flanged bearing surface, or one general bearing member, for example, tray.

As a bearing member, the cover of container for packing the device could be used.

## Claims

1. Device for rotation of items including a basement with a central bearing projection made as integral whole with an item, or with the possibility to fix an item at it, **characterized in that** the ratio of the basement's radius to height of the central bearing projection is within 40-2000.

2. Device as in claim 1, **characterized in that** the basement is made at least with one lateral projection of lesser height than the central one,

3. Device for rotation of items including a basement with a central bearing projection made as integral whole with an item, or with the possibility to fix an item at it, **characterized in that** the basement is made with at least one lateral projection of lesser height than the central one.

4. Device as in claim 3, **characterized in** the ratio of the distance between the centers of the central bearing projection and the lateral projections to the difference between these projections' heights is within 40-2000.

5. Device as in claim 3, **characterized in that** the lateral projections are pointed.

6. Device as in claim 3, **characterized in that** the lateral projections are straight or curved sections.

7. Device as in claim 3, **characterized in that** the lateral projection is ring-shaped.

8. Device as in any of claims 3 to 7, **characterized in that** the central bearing projection and/or lateral projections is made adjustable in height.

9. Device as in claim 8, **characterized in that** the projections are made as threaded members.

10. Device as in any of claims 3 to 7 and 9, **characterized in that** the projections are made from some from easily machinable material.

11. Device as in any of claims 3 to 7 and 9, **characterized in that** at least one projection is made with some flanged bearing surface.

12. Device as in any of claims 3 to 7 and 9, **characterized in that** the basement is made with adjustable counter-weights.

13. Device as in claim 12, **characterized in that** the counter-weights are threaded members.

14. Device as in any of claims 3 to 7, 9 and 13, **characterized in that** the lower surface of the basement is profiled and simulates air propeller blades and/or forms air ducts.

15. Device as in any of claims 3 to 7, 9 and 13, **characterized in that** the basement is made with some massive part and/or equipped at least with one weight.

16. Device as in claim 15, **characterized in that** the weight is made in the shape of a ring or as discrete mass.

17. Device as in any of claims 3 to 7, 9 and 13, **characterized in that** the basement is made with a cavity where an indicatory element having a possibility to move is located.

18. Device for rotation of items including a basement with a central bearing projection made with the possibility to fix an item at it.

19. Device for rotation of items including a basement with a central bearing projection made as integral whole with an item or with the possibility to fix an item at it, **characterized in that** the bearing projection is made with a flanged bearing surface, or ring-shaped, or is formed by separate members being located circumferentially.

20. Device as in claim 19, **characterized in that** the ratio of the lower surface of the basement to the flanged bearing surface of the bearing projection, or to the area closed by members forming the bearing projection, is 16 - 400.

21. Device for rotation of items including a basement made as integral whole with an item, or with the possibility to fix an item at, and with a lower profiled surface with maximum height of a protruding central bearing projection being more than that of its peripheral bearing area.

22. Device for rotation of items per i. 21 being different due to the lower profiled surface shall be made convex forming at least one peripheral protruding bearing area of height lesser than maximum height of the protruding central bearing area of the lower profiled surface.

23. Device for rotation of items as in claim 21, **characterized in that** the lower profiled surface is wavy in planes crossing the vertical central axis of the basement.

24. Device for rotation of items as in claim 21, **characterized in that** the lower profiled surface is conical.

25. Device for rotation of items including a basement made as integral whole with an item, or with the possibility to fix an item at it, and with a lower profiled surface forming some protruding central bearing area and at least one peripheral stop projection, or forming at least one peripheral bearing area and central bearing projection; wherein the height of the protruding central bearing area is greater than that of the peripheral stop projection, and the height of the central bearing projection is greater than that of the peripheral bearing area.

26. Set for rotation of items including at least one device having a basement with a central bearing projection, being made as integrated whole with an item, or with the possibility to fix an item at it, and some separate bearing members with flanged bearing surface for the correspondent basement, or one bearing member with flanged bearing surface for at least two basements.

27. Set for rotation of items as in claim 26, **characterized by** its equipment by the packing having a flat surface for bearing the basement.

28. Set for rotation of items as in claim 27, **characterized in that** the above surface is made at the cover.
